# EUROPEAN PATENT APPLICATION

(11) **EP 4 817 976 A1**
(43) Date of publication of application: **07.10.2026**
(21) Application number: 24899428.7
(22) Date of filing: 23.09.2024
(51) Int. Cl.: B60W 20/15

(54) **CONTROL METHOD FOR HYBRID POWER SYSTEM, HYBRID POWER SYSTEM, AND CONTROLLER**

(30) Priority: 07.12.2023 CN 202311675329
(71) Applicant: Zoomlion Heavy Industry Science and Technology Co., Ltd., Changsha, Hunan 410013 (CN)
(72) Inventor: REN, Yonghui, Changsha, Hunan 410013 (CN); YI, Lingyun, Changsha, Hunan 410013 (CN); ZHANG, Guilian, Changsha, Hunan 410013 (CN); LI, Bo, Changsha, Hunan 410013 (CN); SHEN, Changwu, Changsha, Hunan 410013 (CN)
(74) Representative: Petraz, Gilberto Luigi
(86) International application number: PCT/CN2024/120443
(87) International publication number: WO 2025/118784

(57) **Abstract**

Provided are a control method for a hybrid power system, a hybrid power system, and a controller. The hybrid power system includes a through-shaft gear pump, where the through-shaft gear pump includes a first input end and a second input end, the first input end is connected to a first branch, and the second input end is connected to a second branch. The method includes: acquiring a first output torque of an engine and a state of charge of a traction battery in real time in a case that a first input end of a through-shaft gear pump is in communication with a first branch; controlling a second input end of the through-shaft gear pump to be in communication with a second branch in a case that the first output torque and the state of charge satisfy a first preset condition; and adjusting a second output torque of an electric motor to change the first output torque and to improve specific fuel consumption of the engine. According to the present disclosure, by introducing the through-shaft gear pump including two input ends, the model of the electric motor is flexibly matched, the cost is effectively reduced, and bidirectional power transmission from the engine and the electric motor to the through-shaft gear pump is achieved.

## Description

### Cross Reference to Related Applications

The present disclosure claims priority to Chinese Application No. 202311675329.3 filed on December 07, 2023, which is specifically and entirely incorporated by reference.

### Field of the Invention

The present disclosure relates to the technical field of engineering machinery, and in particular to a control method for a hybrid power system, a hybrid power system, a storage medium, and a controller.

### Background of the Invention

Against the backdrop of global resource scarcity and increasingly nationwide severe environmental pollution, vigorous development of new energy has emerged as one of the primary directions for industrial development in recent years. For a traditional truck-mounted crane, an engine not only drives a vehicle to travel, but also drives a hydraulic oil pump to drive a hoisting operation by connecting a power take-off when the vehicle is parked. An operating condition point of the engine is extremely difficult to remain in an optimal fuel economy zone when the crane is in a pure-fuel hoisting operation, resulting in poor fuel efficiency. Moreover, the pure-fuel operation generates substantial emission pollution and noise pollution, which conflicts with the theme of energy conservation and environmental protection. A pure electric crane needs to balance both traveling and the hoisting operation, as well as overall vehicle cost, and has the disadvantages of low driving range and high cost.

In view of the above problems, an oil-electric hybrid system using a through-shaft motor is provided in the prior art. Alternatively, the function that an electric motor drives an oil pump hoisting operation is implemented through the solution of adding a power take-off system. Some hybrid vehicles also implement the function that the electric motor acts as the oil pump hoisting operation by increasing the number of intermediate shafts of a transmission. However, the selection of electric motors is tied to speed ratios of other structural members in the above structures, resulting in a limited range of selection of the electric motors. Moreover, separate addition of components is required in some hybrid hoisting operation modes, resulting in a significant increase in both cost and maintenance cost.

### Summary of the Invention

An objective of an embodiment of the present disclosure is to provide a control method for a hybrid power system, so as to solve the technical defects in the prior art that model replacement of an electric motor is tied to speed ratios of other structural members and the hybrid power system suffers from high cost.

In order to achieve the above objective, a first aspect of the present disclosure provides a control method for a hybrid power system. The hybrid power system includes a through-shaft gear pump, the through-shaft gear pump includes a first input end and a second input end, the first input end is connected to a first branch, the second input end is connected to a second branch, the first branch includes an engine, and the second branch includes an electric motor and a traction battery. The control method includes:
acquiring a first output torque of the engine and a state of charge of the traction battery in real time in a case that the first input end of the through-shaft gear pump is in communication with the first branch;
controlling the second input end of the through-shaft gear pump to be in communication with the second branch in a case that the first output torque and the state of charge satisfy a first preset condition; and
adjusting a second output torque of the electric motor to change the first output torque and to improve specific fuel consumption of the engine.

In an embodiment of the present disclosure, it is determined that the first output torque and the state of charge satisfy the first preset condition in a case that any one of the following conditions is satisfied: the first output torque is less than or equal to a lower limit value of a preset torque interval, and the state of charge is less than or equal to a first preset state of charge; the first output torque is located within the preset torque interval, and the state of charge is less than or equal to the first preset state of charge; and the first output torque is greater than an upper limit value of the preset torque interval, and the state of charge is greater than the first preset state of charge.

In an embodiment of the present disclosure, the adjusting a second output torque of the electric motor to change the first output torque and improve specific fuel consumption of the engine includes: controlling the electric motor to generate power and increasing negative output torque of the electric motor to increase the first output torque and to improve the specific fuel consumption of the engine in a case that the first output torque is less than or equal to a lower limit value of a preset torque interval and the state of charge is less than or equal to a first preset state of charge, and alternatively, the first output torque is located within a preset torque interval and the state of charge is less than or equal to a first preset state of charge.

In an embodiment of the present disclosure, the control method further includes: controlling the electric motor to consume power and increasing positive output torque of the electric motor to reduce the first output torque and to improve the specific fuel consumption of the engine in a case that the first output torque is greater than an upper limit value of the preset torque interval and the state of charge is greater than the first preset state of charge.

In an embodiment of the present disclosure, the control method further includes: controlling the second input end of the through-shaft gear pump to be disconnected from the second branch, controlling the electric motor to be shut down and controlling the engine to drive the through-shaft gear pump at the first output torque in a case that the first output torque and the state of charge satisfy a second preset condition.

In an embodiment of the present disclosure, it is determined that the first output torque and the state of charge satisfy the second preset condition in a case that any one of the following conditions is satisfied: the first output torque is less than or equal to a lower limit value of a preset torque interval, and the state of charge is greater than a first preset state of charge; the first output torque is located within the preset torque interval, and the state of charge is greater than the first preset state of charge; and the first output torque is greater than an upper limit value of the preset torque interval, and the state of charge is less than the first preset state of charge.

In an embodiment of the present disclosure, the control method further includes: performing the following control operations in a case that the state of charge is greater than a second preset state of charge: controlling the second input end of the through-shaft gear pump to be in communication with the second branch; controlling the first input end of the through-shaft gear pump to be disconnected from the first branch; controlling the engine to be shut down; and controlling the traction battery to drive the electric motor to drive the through-shaft gear pump at the second output torque.

A second aspect of the present disclosure provides a controller. The controller is configured to perform the above control method for a hybrid power system.

A third aspect of the present disclosure provides a hybrid power system. The hybrid power system includes:
a through-shaft gear pump, where the through-shaft gear pump includes a first input end and a second input end, the first input end is connected to a first branch, and the second input end is connected to a second branch;
the first branch including an engine;
the second branch including an electric motor and a traction battery, where the electric motor is connected to the traction battery;
the above controller configured to perform the above control method for a hybrid power system.

In an embodiment of the present disclosure, the through-shaft gear pump further includes an input-through gear shaft including the first input end and the second input end; and a driven gear shaft meshing with the input-through gear shaft.

In an embodiment of the present disclosure, the through-shaft gear pump further includes a pump housing configured to fix the input-through gear shaft and the driven gear shaft and isolate an interior of the through-shaft gear pump from an external environment; a left end cover fixed to a first end of the pump housing; and a right end cover fixed to a second end of the pump housing.

In an embodiment of the present disclosure, the first branch further includes a piston pump, where a first end of the piston pump is connected to the engine, a second end of the piston pump is connected to the through-shaft gear pump, an oil pump assembly system is formed by the piston pump and the through-shaft gear pump, and the oil pump assembly system is configured to be connected to a target operating system and transmit a first output torque of the engine to the target operating system.

In an embodiment of the present disclosure, the second branch further includes a speed reducer, where a first end of the speed reducer is connected to the through-shaft gear pump, a second end of the speed reducer is connected to the electric motor to make the electric motor coaxial with the oil pump assembly system formed by the piston pump and the through-shaft gear pump, the speed reducer is configured to adjust a first transmission ratio of the electric motor, and an output shaft of the speed reducer is coaxial with an output shaft of a transmission in a case that the first transmission ratio is adjusted by the speed reducer to reduce a rotating speed of the electric motor and increase a second output torque of the electric motor.

In an embodiment of the present disclosure, a first end of the electric motor is connected to the through-shaft gear pump, a second end of the electric motor is connected to the traction battery, the electric motor is coaxial with the oil pump assembly system formed by the piston pump and the through-shaft gear pump, and the electric motor is configured to provide second output torque.

In an embodiment of the present disclosure, the first branch further includes a power take-off, where a first end of the power take-off is connected to the engine, and a second end of the power take-off is connected to the piston pump, and the power take-off is configured to transmit an output torque provided by the engine to the piston pump; a clutch, where a first end of the clutch is connected to the engine, and a second end of the clutch is connected to a transmission, and the clutch is configured to connect the engine to the transmission to prevent the transmission from impacting the engine during overload; and the transmission, where a first end of the transmission is connected to the clutch, and a second end of the transmission is connected to the power take-off, and the transmission is configured to adjust a second transmission ratio of the engine.

In an embodiment of the present disclosure, a second output torque is output by the electric motor and transmitted to the engine through the second branch to adjust the first output torque of the engine and the adjusted first output torque is transmitted by the through-shaft gear pump to the target operating system through the first branch in a case that the first input end of the through-shaft gear pump is in communication with the first branch and the second input end of the through-shaft gear pump is in communication with the second branch; and the first output torque of the engine is transmitted by the through-shaft gear pump to the target operating system through the first branch in a case that the first input end is in communication with the first branch and the second input end is disconnected from the second branch.

In an embodiment of the present disclosure, the electric motor is driven by the traction battery to output a second output torque and the second output torque of the electric motor is transmitted by the through-shaft gear pump to the target operating system through the second branch in a case that the second input end of the through-shaft gear pump is in communication with the second branch and the first input end of the through-shaft gear pump is disconnected from the first branch.

A fourth aspect of the present disclosure provides a machine-readable storage medium.

The machine-readable storage medium stores an instruction, where the instruction causes a controller to be configured to perform the above control method for a hybrid power system when executed by the controller.

According to the above technical solution, the first output torque of the engine and the state of charge of the traction battery are acquired in real time in a case that the first input end of the through-shaft gear pump is in communication with the first branch. The second input end of the through-shaft gear pump is controlled to be in communication with the second branch in a case that the first output torque and the state of charge satisfy the first preset condition. Thus, the second output torque of the electric motor is adjusted to change the first output torque and improve the specific fuel consumption of the engine. By introducing the through-shaft gear pump including two input ends, one end of the through-shaft gear pump can be separately connected to the electric motor, such that the model of the electric motor is not limited by the speed ratios of other structural members such as a generator during replacement, and the model of the electric motor is flexibly matched. Moreover, no separate end cover mold needs to be developed for the electric motor such that the cost can be effectively reduced. Moreover, the other end of the through-shaft gear pump is connected to the engine, such that bidirectional power transmission from the engine and the electric motor to the through-shaft gear pump is achieved.

Other features and advantages of the embodiments of the present disclosure will be described in detail in the particular implementation section that follows.

### Brief Description of Drawings

The accompanying drawings serve to provide further understanding of the embodiments of the present disclosure, constitute part of the description, and serve to explain the embodiments of the present disclosure together with the following particular implementations instead of limiting the embodiments of the present disclosure. In the figures,
FIG. 1A schematically shows a structural block diagram of a first hybrid power system according to an embodiment of the present disclosure;
FIG. 1B schematically shows a structural block diagram of a second hybrid power system according to an embodiment of the present disclosure;
FIG. 1C schematically shows a structural block diagram of a third hybrid power system according to an embodiment of the present disclosure;
FIG. 1D schematically shows a structural block diagram of a fifth hybrid power system according to an embodiment of the present disclosure;
FIG. 1E schematically shows a structural block diagram of a sixth hybrid power system according to an embodiment of the present disclosure;
FIG. 2 schematically shows a schematic flowchart of a control method for a hybrid power system according to an embodiment of the present disclosure;
FIG. 3A schematically shows a structural block diagram of a through-shaft gear pump according to an embodiment of the present disclosure;
FIG. 3B schematically shows a structural block diagram of another through-shaft gear pump according to an embodiment of the present disclosure; and
FIG. 4 schematically shows an internal structural diagram of a computer device according to an embodiment of the present disclosure.

### Description of reference numerals

| | | | |
|---|---|---|---|
| 101 | Through-shaft gear pump | 102 | Engine |
| 103 | Electric motor | 104 | Traction battery |
| 105 | Vehicle control unit | 106 | Piston pump |
| 107 | Speed reducer | 108 | Power take-off |
| 109 | Clutch | 110 | Transmission |
| 111 | Multiple-in-one controller | | |
| 310 | Input-through gear shaft | 312 | First input end |
| 314 | Second input end | 320 | Driven gear shaft |
| 330 | Pump housing | 340 | Left end cover |
| 360 | Right end cover | | |

### Detailed Description of the Embodiments

In order to make the objectives, the technical solutions and the advantages of the embodiments of the present disclosure clearer, the technical solutions in the embodiments of the present disclosure will be clearly and completely described below in combination with the accompanying drawings in the embodiments of the present disclosure. It should be understood that the particular implementations described herein are merely used for describing and explaining the embodiments of the present disclosure and are not intended to limit the embodiments of the present disclosure. Based on the embodiments in the present disclosure, all other embodiments obtained by those of ordinary skill in the art without making creative efforts fall within the scope of protection of the present disclosure.

It should be noted that if directional indications (such as upper, lower, left, right, front, rear...) are involved in the embodiments of the present disclosure, the directional indications are merely used for explaining the relative position relations and motion situations between components in a specific posture (as shown in the figures), and if the specific posture is changed, the directional indications are also changed accordingly.

In addition, if the descriptions of "first", "second", etc. are involved in the embodiments of the present disclosure, the descriptions of "first", "second", etc. are merely for descriptive purposes and are not to be construed as indicating or implying their relative importance or implicitly specifying the number of indicated technical features. Thus, a feature defined with "first" or "second" can explicitly or implicitly include at least one of the features. In addition, the technical solutions of the embodiments can be combined with one another, but are necessarily based on the achievement of those of ordinary skill in the art. When the combination of the technical solutions is contradictory or impossible to implement, it should be considered that such a combination of the technical solutions does not exist and does not fall within the scope of protection of the present disclosure.

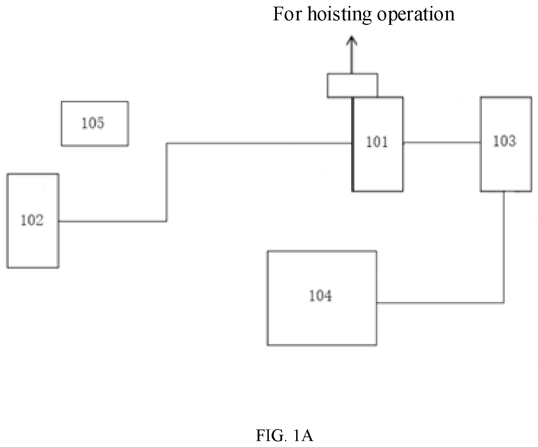

In an embodiment of the present disclosure, as shown in FIG. 1A, a structural block diagram of a first hybrid power system is provided. Specifically, the hybrid power system includes:
a through-shaft gear pump 101, where the through-shaft gear pump 101 includes a first input end and a second input end, the first input end is connected to a first branch, and the second input end is connected to a second branch;
the first branch including an engine 102;
the second branch including an electric motor 103 and a traction battery 104, where the electric motor 103 is connected to the traction battery 104; and
a controller, where the controller may include a vehicle control unit 105, and the vehicle control unit 105 is electrically connected to the first branch, the second branch, and the through-shaft gear pump 101 (not shown in the figure).

The engine is a machine capable of converting other forms of energy into mechanical energy. In the technical solution, the engine used is an internal combustion engine, mixes and then compresses fuel and air for explosion to generate power, and converts heat energy into the mechanical energy to drive a vehicle to travel or operate. The electric motor refers to an electromagnetic apparatus that converts or transmits electric energy according to a law of electromagnetic induction. The electric motor may be used as an electromotor to drive a hydraulic pump group, and may be used as a generator to charge the traction battery.

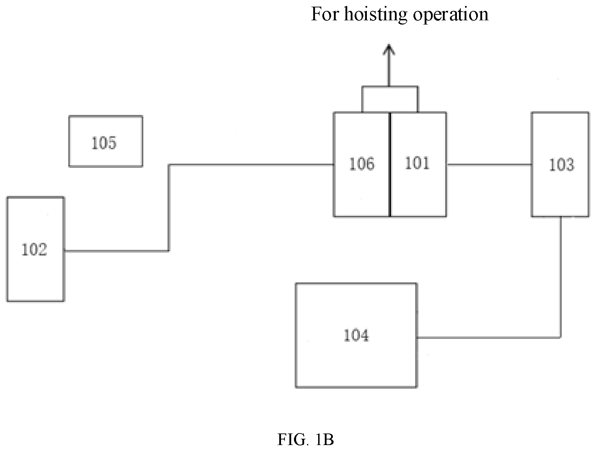

In an embodiment of the present disclosure, as shown in FIG. 1B, a structural block diagram of a second hybrid power system is provided. Specifically, a first branch of the hybrid power system further includes:
a piston pump 106, where a first end of the piston pump 106 is connected to the engine 102, a second end of the piston pump 106 is connected to the through-shaft gear pump 101, an oil pump assembly system is formed by the piston pump and the through-shaft gear pump 101, and the oil pump assembly system is configured to be connected to a target operating system and transmit a first output torque of the engine 102 to the target operating system.

The piston pump is a type of water pump, is an important working component in hydraulic and pneumatic transmission, and belongs to a positive displacement pump and a reciprocating pump. The piston pump changes a volume of a sealed working chamber to suck and press oil by relying on reciprocating motion of a piston in a cylinder block. The piston pump has the advantages of high rated pressure, compact structure, high efficiency and convenient flow adjustment, and is widely used in occasions with high pressure, large flow, and flow adjustment demand. In the technical solution, the first end of the piston pump is connected to the engine, the second end of the piston pump is connected to the gear pump, and the oil pump assembly system is formed by the piston pump and the gear pump. The oil pump assembly system may be configured to be connected to the target operating system and transmit the first output torque of the engine to the target operating system. The target operating system may refer to a hoisting operation system. The first output torque output by the engine is transmitted to the oil pump assembly system connected to the first branch through the first branch of the hybrid power system, and after receiving the first output torque, a first input end of an input-through gear shaft in the oil pump assembly system applies the first output torque to the hoisting operation system for operation of the hoisting operation system.

In an embodiment of the present disclosure, a first end of the electric motor 103 is connected to the through-shaft gear pump 101, a second end of the electric motor 103 is connected to the traction battery 104, the electric motor 103 is coaxial with the oil pump assembly system formed by the piston pump and the through-shaft gear pump 101, and the electric motor 103 is configured to provide a second output torque.

In the technical solution, a speed reducer may not be selected and used to be connected to the electric motor in the hybrid power system, and a motor direct-drive type input through-shaft gear pump may be selected and used. Specifically, in a case of using the motor direct-drive type input through-shaft gear pump, the first end of the electric motor is connected to the input through-shaft gear pump, the second end of the electric motor is connected to the traction battery, the electric motor is coaxial with the oil pump assembly system formed by the piston pump and the input through-shaft gear pump, and the electric motor is configured to provide the second output torque. Specifically, the second output torque output by the electric motor is transmitted to the oil pump assembly system connected to the second branch through the second branch of the hybrid power system, and after receiving the second output torque, the second input end of the input-through gear shaft in the oil pump assembly system applies the second output torque to the hoisting operation system for operation of the hoisting operation system.

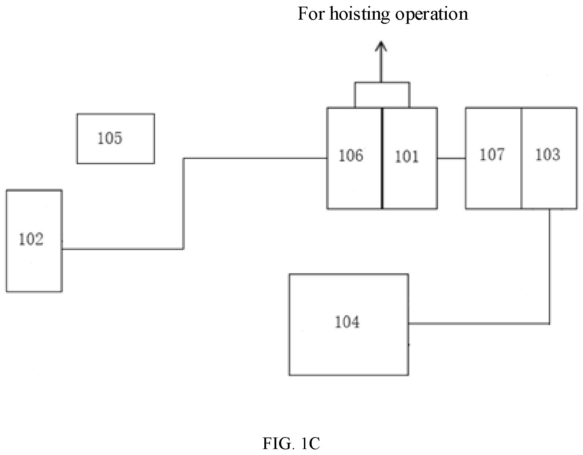

In an embodiment of the present disclosure, as shown in FIG. 1C, a structural block diagram of a third hybrid power system is provided. Specifically, a second branch of the hybrid power system further includes:
a speed reducer 107, where a first end of the speed reducer 107 is connected to the through-shaft gear pump 101, a second end of the speed reducer 107 is connected to the electric motor 103 to make the electric motor 103 coaxial with the oil pump assembly system formed by the piston pump 106 and the through-shaft gear pump 101, the speed reducer 107 is configured to adjust a first transmission ratio of the electric motor 103,
and an output shaft of the speed reducer 107 is coaxial with an output shaft of a transmission 110 in a case that the first transmission ratio is adjusted by the speed reducer 107 to reduce a rotating speed of the electric motor 103 and increase a second output torque of the electric motor 103.

The speed reducer is a power transmission mechanism and is a mechanism that reduces the number of revolutions of the electric motor (motor) to the desired number of revolutions and obtains large torque by using a speed converter of a gear. A main function of the speed reducer is to reduce a speed and simultaneously increase output torque, and a torque output ratio is calculated by multiplying output of the electric motor by a speed reduction ratio. Specifically, the first end of the speed reducer is connected to the input through-shaft gear pump, and the second end of the speed reducer is connected to the electric motor to make the electric motor coaxial with the oil pump assembly system formed by the piston pump and the input through-shaft gear pump. The speed reducer is configured to adjust the first transmission ratio of the electric motor. In the technical solution, the speed reducer may be freely replaced according to a model of the electric motor to match different electric motors and speed reducers, such that the hybrid power system is more flexible. Further, the output shaft of the speed reducer is coaxial with the output shaft of the transmission in a case that the first transmission ratio is adjusted by the speed reducer to reduce the rotating speed of the electric motor and increase the second output torque of the electric motor.

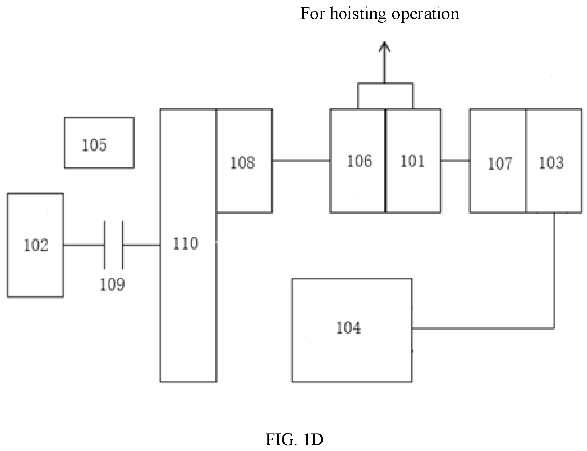

In an embodiment of the present disclosure, as shown in FIG. 1D, a structural block diagram of a fifth hybrid power system is provided. Specifically, a first branch of the hybrid power system further includes:
a power take-off 108, where a first end of the power take-off 108 is connected to the engine 102, and a second end of the power take-off 108 is connected to the piston pump 106 and is configured to transmit an output torque provided by the engine 102 to the piston pump 106;
a clutch 109, where a first end of the clutch 109 is connected to the engine 102, and a second end of the clutch 109 is connected to a transmission 110 and is configured to connect the engine 102 to the transmission 110 to prevent the transmission 110 from impacting the engine 102 during overload; and
the transmission 110, where a first end of the transmission 110 is connected to the clutch 109, and a second end of the transmission 110 is connected to the power take-off 108 and is configured to adjust a second transmission ratio of the engine 102.

The power take-off is one or more groups of variable gears, is also known as a power output device, is generally formed by combining a gear case, a clutch, and a controller, is connected to a low gear of a gearbox or an output shaft of an auxiliary box, and outputs power to an external working apparatus, such as a lift pump. In the technical solution, the first output torque of the engine may be transmitted by the power take-off to the input through-shaft gear pump. Specifically, the first end of the power take-off is connected to the engine, and the second end of the power take-off is connected to the piston pump. After the first output torque is output by the engine, the first output torque is output by the power take-off and transmitted to an oil pump assembly system connected to the first branch through the first branch of the hybrid power system. After receiving the first output torque, a first input end of an input-through gear shaft in the oil pump assembly system applies the first output torque to a hoisting operation system for operation of the hoisting operation system.

The clutch is an apparatus that is mounted between a driving shaft and a driven shaft, is located in a flywheel housing between the engine and the gearbox, and is configured to separate and engage rotational motion of the driving shaft and driven shaft. An output shaft of the clutch is an input shaft of the gearbox, and the engine and the gearbox may be temporarily separated or gradually engaged by the clutch, so as to cut off or transmit power input from the engine to the transmission. The clutch is a common component in mechanical transmission, and may separate or engage a transmission system at any time. The clutch may have functions of starting, stopping, reversing, and speed changing in the transmission system, and may further have an effect of overload protection on machinery. Specifically, in the technical solution, the first end of the clutch is connected to the engine, and the second end of the clutch is connected to the transmission and is configured to connect the engine to the transmission to prevent damage to the engine caused by impact by the transmission on the engine during overload.

The transmission is a gear transmission apparatus that may be fixed or graded to change a transmission ratio of the output shaft and the input shaft, and is also referred as the gearbox. The transmission consists of a transmission mechanism and a speed change mechanism. The separate speed change mechanism may be manufactured. Alternatively, the speed change mechanism and the transmission mechanism may be assembled in the same housing. An ordinary gear is usually used for transmission of the transmission mechanism, and a planetary gear may be alternatively used for transmission of the transmission mechanism. A sliding gear and a clutch are generally used for the ordinary gear transmission type speed change mechanism. The sliding gear is divided into a multi-stage sliding gear and a modified sliding gear. In transmission with a triple sliding gear, an axial dimension is large. In transmission with the modified sliding gear, a structure is compact, but a change in a transmission ratio is small. The transmission is widely used in a machine tool, a vehicle, and other machines that need to change speeds.

A machine tool spindle is usually mounted in the transmission, and is thus also called a spindle box. The machine tool spindle has a compact structure, and is convenient to intensively operate. The transmission configured to change an amount of feeding on the machine tool is called a feeding box. Specifically, in the technical solution, the first end of the transmission is connected to the clutch, and the second end of the transmission is connected to the power take-off and may be configured to adjust the second transmission ratio of the engine.

In an embodiment of the present disclosure, a second output torque is output by the electric motor 103 and transmitted to the engine 102 through the second branch to adjust the first output torque of the engine and the adjusted first output torque is transmitted by the through-shaft gear pump 101 to the target operating system through the first branch in a case that the first input end of the through-shaft gear pump 101 is in communication with the first branch and the second input end of the through-shaft gear pump 101 is in communication with the second branch; and the first output torque of the engine 102 is transmitted by the through-shaft gear pump 101 to the target operating system through the first branch in a case that the first input end is in communication with the first branch and the second input end is disconnected from the second branch.

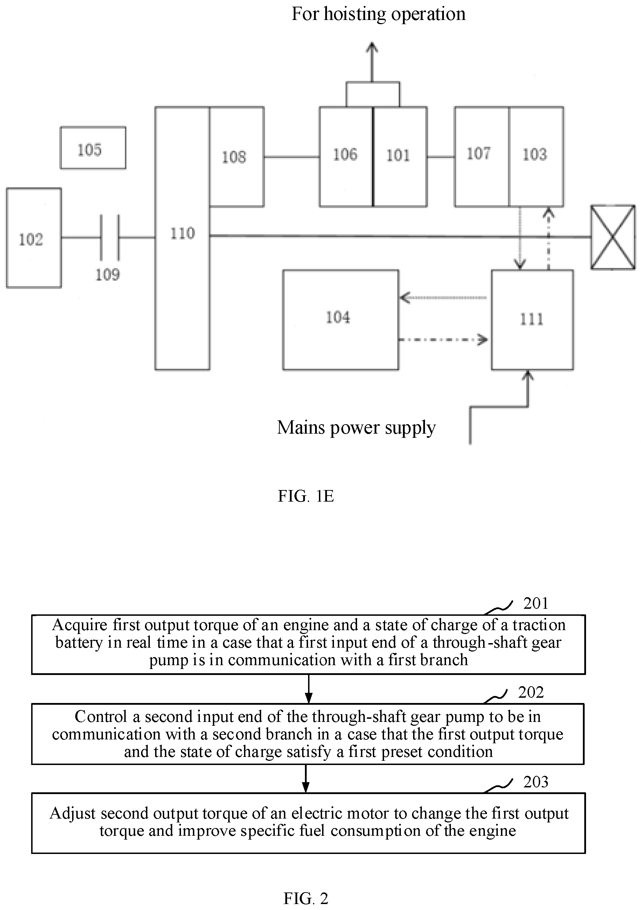

In an embodiment of the present disclosure, as shown in FIG. 1E, a structural block diagram of a sixth hybrid power system is provided. Specifically, the controller may further include a multiple-in-one controller 111. A vehicle control unit 105 is electrically connected to the multiple-in-one controller 111 (not shown in the figure), and the multiple-in-one controller 111 is electrically connected to an electric motor 103 and a traction battery 104.

In a case that the hybrid power system enters an electric drive mode in which the through-shaft gear pump is driven through the traction battery, if a state of charge (SOC) of the traction battery is lower than second preset SOC, an external power supply, such as a mains power supply, is connected to charge the traction battery. The second preset SOC may refer to a corresponding value when battery power of the traction battery is in a sufficient state. In the technical solution, the second preset SOC may be set to 80%. When the SOC is lower than 80%, the external power supply, such as the mains power supply, is connected to charge the traction battery.

The specific fuel consumption of the engine is affected by the first output torque of the engine and the SOC of the traction battery. In order to improve the specific fuel consumption of the engine, a second output torque is output by the electric motor and transmitted to the engine through the second branch to adjust the first output torque of the engine and the adjusted a first output torque is transmitted by the input through-shaft gear pump to a target operating system through the first branch in a case that the first input end of the input through-shaft gear pump is in communication with the first branch and the second input end of the input through-shaft gear pump is in communication with the second branch. In this case, the second output torque is output by the electric motor to adjust the first output torque of the engine, such that the objective of improving the specific fuel consumption of the engine is achieved. The first output torque of the engine is transmitted by the input through-shaft gear pump to the target operating system through the first branch in a case that the first input end of the input through-shaft gear pump is in communication with the first branch and the second input end of the input through-shaft gear pump is disconnected from the second branch.

In an embodiment of the present disclosure, the electric motor 103 is driven by the traction battery 104 to output a second output torque and the second output torque of the electric motor 103 is transmitted by the through-shaft gear pump 101 to the target operating system through the second branch in a case that the second input end of the through-shaft gear pump 101 is in communication with the second branch and the first input end of the through-shaft gear pump 101 is disconnected from the first branch. FIG. 2 schematically shows a schematic flowchart of a control method for a hybrid power system according to an embodiment of the present disclosure. As shown in FIG. 2, a control method for a hybrid power system is provided in an embodiment of the present disclosure. The method may includes:
step 201, a first output torque of an engine and an SOC of a traction battery are acquired in real time in a case that a first input end of a through-shaft gear pump is in communication with a first branch.

In an embodiment of the present disclosure, a gear pump refers to a rotary pump that conveys liquid or pressurizes the liquid by relying on change and movement of a working volume formed between a pump cylinder and a meshing gear. A through shaft is an important component configured to connect the engine to a transmission apparatus, and the through shaft may effectively transmit torque generated by the engine to the transmission apparatus. The through-shaft gear pump provided in the technical solution includes gear shafts parallel to each other in a gear pump body. An input shaft gear shaft of the through-shaft gear pump is designed as a through shaft, and by replacing a driven gear shaft and a sealing end cover of an existing gear pump with an input shaft and an input end cover of the gear pump, bidirectional input to the gear pump is quickly achieved, and input of an oil pump system assembly including the through-shaft gear pump is increased.

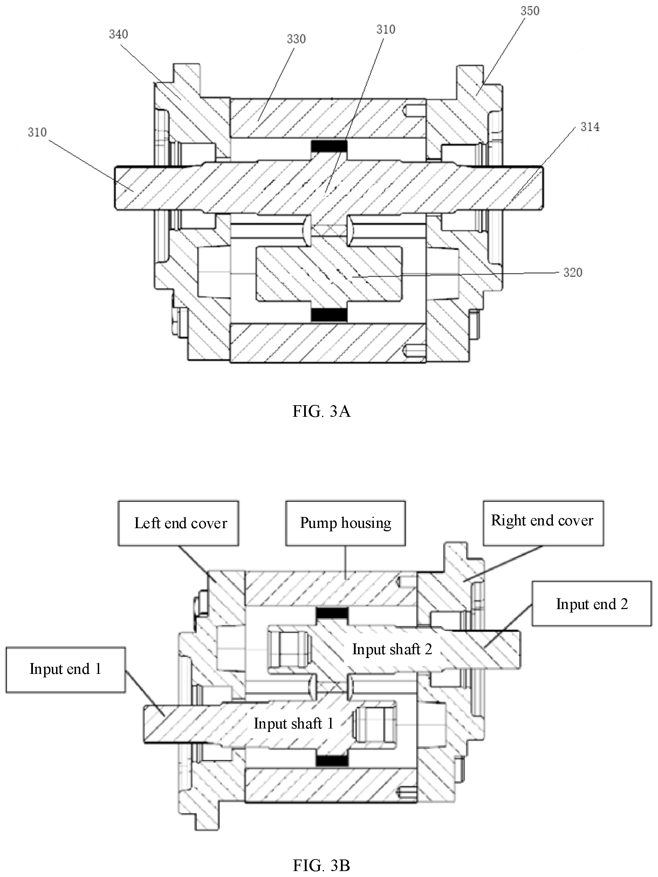

Specifically, as shown in FIGs. 3A and 3B, two through-shaft gear pumps are provided. In FIG. 3B, a through-shaft gear pump includes two gear-linked input-through gear shafts, namely an input-through gear shaft, i.e. input shaft 1 in FIG. 3B, and a second input-through gear shaft, i.e. input shaft 2 in FIG. 3B. The first input-through gear shaft includes a first input end, i.e. input end 1 in FIG. 3B, and the second input-through gear shaft includes a second input end, i.e. input end 2 in FIG. 3B. In FIG. 3A, the through-shaft gear pump includes an input-through gear shaft 310 including a first input end 321 and a second input end 314; and a driven gear shaft 320 meshing with an input-through gear shaft 210.

Gear shafts parallel to each other in an input through-shaft gear pump body include an input-through gear shaft and a driven gear shaft meshing with the input-through gear shaft. The input-through gear shaft includes a first input end arranged on a first side of the input through-shaft gear pump and a second input end arranged on a second side of the input through-shaft gear pump. It should be understood that the input-through gear shaft is a straight through shaft. Thus, a first end and a second end of the input-through gear shaft may be symmetrically arranged on the first side and the second side of the input through-shaft gear pump respectively. The first input end and the second input end are each connected to a power branch, and are configured to transmit power transmitted by the connected power branch to the input-through gear shaft. The driven gear shaft meshes with the input-through gear shaft to form an overall mechanical structure of the input through-shaft gear pump. When the input-through gear shaft is driven by power transmitted by the first input end and/or the second input end, the driven gear shaft meshing with the input-through gear shaft may be driven for driving.

In an embodiment of the present disclosure, the through-shaft gear pump further includes a pump housing 330 configured to fix the input-through gear shaft 310 and the driven gear shaft 320 and isolate an interior of the through-shaft gear pump from an external environment; a left end cover 340 fixed to a first end of the pump housing 330; and a right end cover 360 fixed to a second end of the pump housing 330.

The pump housing refers to a protective housing of a pump, and the common pump housing may be configured to isolate a pump medium from an atmosphere to prevent leakage of the medium and maintain an internal pressure of the pump. Specifically, in the technical solution, the pump housing of the input through-shaft gear pump is configured to fix the input-through gear shaft and the driven gear shaft, isolate an interior of the input through shaft gear pump from an external environment, and prevent leakage caused by splashing of liquid during conveying when the liquid is conveyed by the input-through gear shaft through power conveyed by the first input end and/or the second input end. Specifically, the pump housing further includes a left end cover fixed to the first end of the pump housing, and a right end cover fixed to the second end of the pump housing. The left end cover and the right end cover may be configured to protect the first input end of the input-through gear shaft arranged on the first side of the input through-shaft gear pump and the second input end of the input-through gear shaft arranged on the second side of the input through-shaft gear pump. Moreover, the left end cover and the right end cover may be opened, such that the input-through gear shaft and the driven gear shaft are replaced conveniently. In the technical solution, the through-shaft gear pump in FIG. 3A may be applied to the hybrid power system shown in FIG. 1. Specifically, the first input end of the through-shaft gear pump is connected to the first branch of the hybrid power system, and the second input end of the through-shaft gear pump is connected to the second branch of the hybrid power system. A controller acquires the first output torque of the engine and the SOC of the traction battery in real time in a case that the first input end of the through-shaft gear pump is in communication with the first branch. Torque is special moment that causes an object to rotate. The torque of the engine refers to moment output by the engine from a crankshaft end, and is inversely proportional to the rotating speed of the engine under a condition of fixed power. The quicker the rotating speed is, the smaller the torque is. Conversely, the slower the rotating speed is, the larger the torque is. In the technical solution, the output torque of the engine may act on the through-shaft gear pump to provide power for the through-shaft gear pump. The state of charge of the battery is an SOC. The SOC refers to a state of charge, is configured to reflect remaining capacity of the battery, is numerically defined as a ratio of the remaining capacity to battery capacity, and is commonly represented by percentage. It should be understood that the SOC of the battery may not be directly measured, and a size of the SOC is estimated only through parameters of a battery terminal voltage, charging and discharging current, internal resistance, etc.

Step 202, the second input end of the through-shaft gear pump is controlled to be in communication with the second branch in a case that the first output torque and the SOC satisfy a first preset condition.

In an embodiment of the present disclosure, the specific fuel consumption of the engine may be determined according to a magnitude of the first output torque and a size of the SOC after the first output torque of the engine and the SOC of the traction battery are acquired by the controller in real time. Specifically, it may be confirmed that the specific fuel consumption of the engine is low in a case that the first output torque and the SOC satisfy the first preset condition. The second input end of the through-shaft gear pump is controlled by the controller to be in communication with the second branch of the hybrid power system, such that the specific fuel consumption of the engine is improved through the electric motor by connecting the electric motor.

In an embodiment of the present disclosure, it is determined that the first output torque and the SOC satisfy the first preset condition in a case that any one of the following conditions is satisfied: the first output torque is less than or equal to a lower limit value of a preset torque interval, and the SOC is less than or equal to a first preset SOC; the first output torque is located within the preset torque interval, and the SOC is less than or equal to the first preset SOC; and the first output torque is greater than an upper limit value of the preset torque interval, and the SOC is greater than the first preset SOC.

In the technical solution, the preset torque interval is determined by a model of the engine. The preset torque interval includes the lower limit value and the upper limit value, and the first preset SOC may refer to safe battery power of the traction battery. When the SOC is lower than the safe battery power, activity of the traction battery is reduced if the traction battery is continuously used, and service life of the traction battery is affected in a long run. Thus, the first preset SOC may be regarded as trigger battery power of a self-protection mechanism of the traction battery. A battery of a mobile phone is taken as an example. When an SOC of the mobile phone is 20%, the mobile phone automatically pops up to remind whether to enter a low battery power mode to slow down power consumption. Thus, the first preset SOC may be set to 20% in the technical solution. It may be determined that the first output torque and the SOC satisfy the first preset condition in a case that any one of the following conditions is satisfied. Specifically, three cases may be included. First case: the first output torque is less than or equal to the lower limit value of the preset torque interval, and the SOC is less than or equal to the first preset SOC. Specifically, the first output torque of the engine is less than or equal to a lower limit value of a torque interval, and the SOC of the traction battery is less than or equal to 20%. Second case: the first output torque is located within the preset torque interval, and the SOC is less than or equal to the first preset SOC. Specifically, the first output torque of the engine is located within the torque interval, and the SOC of the traction battery is less than or equal to 20%. Third case: the first output torque is greater than the upper limit value of the preset torque interval, and the SOC is greater than the first preset SOC. Specifically, the first output torque of the engine is greater than an upper limit value of the torque interval, and the SOC of the traction battery is greater than 20%.

Step 203, a second output torque of the electric motor is adjusted to change the first output torque and improve specific fuel consumption of the engine.

In an embodiment of the present disclosure, the specific fuel consumption of the engine may be determined according to the magnitude of the first output torque and the size of the SOC after the first output torque of the engine and the SOC of the traction battery are acquired by the controller in real time. It may be confirmed that the specific fuel consumption of the engine is low in a case that the first output torque and the SOC satisfy the first preset condition. In this case, the second input end of the through-shaft gear pump needs to be controlled by the controller to be in communication with the second branch of the hybrid power system, such that the specific fuel consumption of the engine is improved through the electric motor by connecting the electric motor. Specifically, the second output torque of the electric motor may be adjusted by the controller to change the first output torque and improve the specific fuel consumption of the engine.

In an embodiment of the present disclosure, the step that second output torque of the electric motor is adjusted to change the first output torque and improve specific fuel consumption of the engine includes: the electric motor is controlled to generate power and negative output torque of the electric motor is increased to increase the first output torque and improve the specific fuel consumption of the engine in a case that the first output torque is less than or equal to a lower limit value of a preset torque interval and the SOC is less than or equal to a first preset SOC, and alternatively, the first output torque is located within a preset torque interval and the SOC is less than or equal to a first preset SOC.

In the technical solution, the first preset condition includes three cases. Specifically, for the first case, the first output torque of the engine is less than or equal to the lower limit value of the torque interval, and the SOC of the traction battery is less than or equal to 20%. When the electric motor is controlled by the controller to be started and generate power as a load of the engine, negative torque is output by the electric motor. The negative output torque of the electric motor is controlled by the controller to be increased to increase the first output torque of the engine and make the first output torque reach the preset torque interval and not exceed the upper limit value of the preset torque interval, such that the specific fuel consumption of the engine is improved. Moreover, battery power generated by power generation of the electric motor is output to the traction battery to charge the traction battery. For the second case, when the first output torque of the engine is located within the torque interval, and the SOC of the traction battery is less than or equal to 20%. The electric motor is controlled by the controller to be started and generate power, and negative torque is output by the electric motor. The negative output torque of the electric motor is controlled by the controller to be increased to increase the first output torque of the engine and make the first output torque not exceed the upper limit value of the preset torque interval, such that the specific fuel consumption of the engine is improved. In a case that the electric motor is present acts as a load, the increased first output torque is transmitted by the engine to the power take-off through the clutch and the transmission, and the power take-off is connected to a transmission shaft and transmits power to the piston pump in the oil pump assembly system. The power is transmitted by piston pump to the through-shaft gear pump through the first input end of the through-shaft gear pump, such that the through-shaft gear pump is driven to provide power for a hoisting operation system.

In an embodiment of the present disclosure, the control method further includes: the electric motor is controlled to consume power and positive output torque of the electric motor is increased to reduce the first output torque and improve the specific fuel consumption of the engine in a case that the first output torque is greater than an upper limit value of the preset torque interval and the SOC is greater than the first preset SOC. In the technical solution, for the third case under the first preset condition, the first output torque of the engine is greater than the upper limit value of the torque interval, and the SOC of the traction battery is greater than 20%. The electric motor is controlled by the controller to be started and generate power, and power is provided by the electric motor by consuming the battery power of the traction battery. In this case, positive torque is output by the electric motor, and the positive output torque of the electric motor is controlled by the controller to be increased to reduce the first output torque of the engine and make the first output torque reach the preset torque interval, such that the specific fuel consumption of the engine is improved. In a case that the electric motor utilizes power, the reduced first output torque is transmitted by the engine to the power take-off through the clutch and the transmission, the power take-off is connected to the transmission shaft and transmits power to the piston pump in the oil pump assembly system, and the power is transmitted by the piston pump to the through-shaft gear pump through the first input end of the through-shaft gear pump. Moreover, the electric motor outputs positive torque under the driving effect of the traction battery, and transmits power to the through-shaft gear pump through the second input end of the through-shaft gear pump through the speed reducer, such that the through-shaft gear pump is driven to provide power for the hoisting operation system under a power action of the engine and the electric motor.

According to the above technical solution, by introducing the through-shaft gear pump including two input ends, one end of the through-shaft gear pump can be separately connected to the electric motor, such that a model of the electric motor is not limited by speed ratios of other structural members such as a generator when replaced, and the model of the electric motor is flexibly matched. Moreover, no separate end cover mold needs to be developed for the electric motor, such that cost can be effectively reduced. Moreover, the other end of the through-shaft gear pump is connected to the engine, such that bidirectional power transmission from the engine and the electric motor to the through-shaft gear pump is achieved.

In an embodiment of the present disclosure, the control method further includes: the second input end of the through-shaft gear pump is controlled to be disconnected from the second branch, the electric motor is controlled to be shut down and the engine is controlled to drive the through-shaft gear pump at the first output torque in a case that the first output torque and the SOC satisfy a second preset condition.

After the first output torque of the engine and the SOC of the traction battery are acquired by the controller in real time, the specific fuel consumption of the engine may be determined according to the magnitude of the first output torque and the size of the SOC. It may be confirmed that the specific fuel consumption of the engine satisfies an actual demand in a case that the first output torque and the SOC satisfy the second preset condition. In this case, the controller needs to control the second input end of the through-shaft gear pump to be disconnected from the second branch of the hybrid power system, control the electric motor to be shut down, and control the engine to drive the through-shaft gear pump at the first output torque.

In an embodiment of the present disclosure, it is determined that the first output torque and the SOC satisfy the second preset condition in a case that any one of the following conditions is satisfied: the first output torque is less than or equal to a lower limit value of a preset torque interval, and the SOC is greater than a first preset SOC; the first output torque is located within the preset torque interval, and the SOC is greater than the first preset SOC; and the first output torque is greater than an upper limit value of the preset torque interval, and the SOC is less than the first preset SOC.

The first preset SOC may be set to 20% in the technical solution. It may be determined that the first output torque and the SOC satisfy the second preset condition in a case that any one of the following conditions is satisfied. Specifically, three cases may be included. First case: the first output torque is less than or equal to the lower limit value of the preset torque interval, and the SOC is greater than the first preset SOC. Specifically, the first output torque of the engine is less than or equal to a lower limit value of a torque interval, and the SOC of the traction battery is greater than 20%. Second case: the first output torque is located within the preset torque interval, and the SOC is greater than the first preset SOC. Specifically, the first output torque of the engine is located within the torque interval, and the SOC of the traction battery is greater than 20%. Third case: the first output torque is greater than the upper limit value of the preset torque interval, and the SOC is less than the first preset SOC. Specifically, the first output torque of the engine is greater than an upper limit value of the torque interval, and the SOC of the traction battery is less than 20%.

In an embodiment of the present disclosure, the control method further includes: the following control operations are performed in a case that the SOC is greater than a second preset SOC: the second input end of the through-shaft gear pump is controlled to be in communication with the second branch; the first input end of the through-shaft gear pump is controlled to be disconnected from the first branch; the engine is controlled to be shut down; and the traction battery is controlled to drive the electric motor to drive the through-shaft gear pump at the second output torque.

The second preset SOC may refer to a corresponding value when battery power of the traction battery is in a sufficient state. The second preset SOC may be set to 80% in the technical solution. The hybrid power system enters an electric drive mode in which the through-shaft gear pump is driven through the traction battery when the SOC reaches 80%. Specifically, the controller controls the second input end of the through-shaft gear pump to be in communication with the second branch, controls the first input end of the through-shaft gear pump to be disconnected from the first branch, further controls the engine to be shut down, and controls the traction battery to drive the electric motor to drive the through-shaft gear pump at the second output torque. An external power supply, such as a mains power supply, is connected to charge the traction battery when the hybrid power system is in the electric drive mode and the SOC of the traction battery is less than 80%.

According to the technical solution, through the through-shaft gear pump including two input ends, bidirectional power transmission from the engine and the electric motor to the through-shaft gear pump is achieved without changing an original transmission route. Moreover, according to the through-shaft gear pump provided in the technical solution, bidirectional input to the gear pump can be quickly achieved by replacing the driven gear shaft and the sealing end cover of the gear pump with the input shaft and the input end cover of the gear pump. Moreover, no separate end cover mold needs to be developed for the driving motor, such that cost of a whole oil pump and motor assembly is lower. In the hybrid power system, the input shaft at the other end of the gear pump can be driven through the electric motor and the speed reducer to match different electric motors and speed reducers, such that the system is more flexible.

According to the hybrid power system including the through-shaft gear pump according to the present disclosure, the electric motor can generate power as a load during hoisting operation, such that distribution of an operating condition point of the engine is optimized, and fuel efficiency is improved.

A storage medium is provided in an embodiment of the present disclosure. The storage medium stores a program, where the program implements the above control method for a hybrid power system when executed by a controller.

A controller is provided in an embodiment of the present disclosure. The controller is configured to run a program, and the program performs the above control method for a hybrid power system when running.

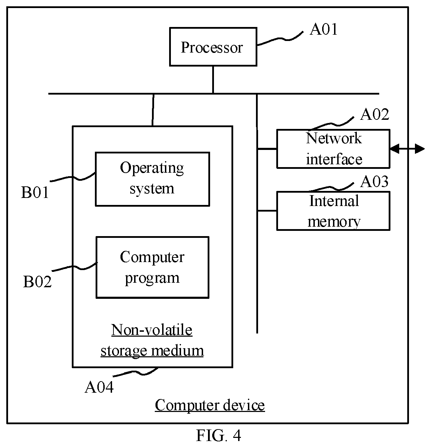

In an embodiment, a computer device is provided. The computer device may be a server, and an internal structural diagram of the computer device may be as shown in FIG. 4. The computer device includes a controller A01, a network interface A02, a memory (not shown in the figure), and a database (not shown in the figure) connected through a system bus. The controller A01 of the computer device is configured to provide computing and control capabilities. The memory of the computer device includes an internal memory A03 and a non-volatile storage medium A04. An operating system B01, a computer program B02, and the database (not shown) are stored by the non-volatile storage medium A04. An environment is provided by internal memory A03 for running of the operating system B01 and the computer program B02 in the non-volatile storage medium A04. The database of the computer device is configured to store data of the control method for a hybrid power system. The network interface A02 of the computer device is configured to communicate with an external terminal through a network connection. The computer program B02 implements the control method for a hybrid power system when executed by the controller A01.

Those skilled in the art can understand that a structure shown in FIG. 4 is only a block diagram of part of the structure related to the solution of the present disclosure, and does not constitute a limitation on the computer device to which the solution of the present disclosure is applied. The particular computer device may include more or less components than shown in the figure, or combine some components, or have different component arrangements.

A device is provided in an embodiment of the present disclosure. The device includes a controller, a memory, and a program stored in the memory and runnable on the controller. The controller implements the following steps when executing the program: a first output torque of the engine and an SOC of the traction battery are acquired in real time in a case that the first input end of the through-shaft gear pump is in communication with the first branch; the second input end of the through-shaft gear pump is controlled to be in communication with the second branch in a case that the first output torque and the SOC satisfy a first preset condition; and a second output torque of the electric motor is adjusted to change the first output torque and improve specific fuel consumption of the engine.

In an embodiment, it is determined that the first output torque and the SOC satisfy the first preset condition in a case that any one of the following conditions is satisfied: the first output torque is less than or equal to a lower limit value of a preset torque interval, and the SOC is less than or equal to a first preset SOC; the first output torque is located within the preset torque interval, and the SOC is less than or equal to the first preset SOC; and the first output torque is greater than an upper limit value of the preset torque interval, and the SOC is greater than the first preset SOC.

In an embodiment, the step that a second output torque of the electric motor is adjusted to change the first output torque and improve specific fuel consumption of the engine includes: the electric motor is controlled to generate power and negative output torque of the electric motor is increased to increase the first output torque and improve the specific fuel consumption of the engine in a case that the first output torque is less than or equal to a lower limit value of a preset torque interval and the SOC is less than or equal to a first preset SOC, and alternatively, the first output torque is located within a preset torque interval and the SOC is less than or equal to a first preset SOC.

In an embodiment, the control method further includes: the electric motor is controlled to consume power and positive output torque of the electric motor is increased to reduce the first output torque and improve the specific fuel consumption of the engine in a case that the first output torque is greater than an upper limit value of the preset torque interval and the SOC is greater than the first preset SOC.

In an embodiment, the control method further includes: the second input end of the through-shaft gear pump is controlled to be disconnected from the second branch, the electric motor is controlled to be shut down and the engine is controlled to drive the through-shaft gear pump at the first output torque in a case that the first output torque and the SOC satisfy a second preset condition.

In an embodiment, it is determined that the first output torque and the SOC satisfy the second preset condition in a case that any one of the following conditions is satisfied: the first output torque is less than or equal to a lower limit value of a preset torque interval, and the SOC is greater than a first preset SOC; the first output torque is located within the preset torque interval, and the SOC is greater than the first preset SOC; and the first output torque is greater than an upper limit value of the preset torque interval, and the SOC is less than the first preset SOC.

In an embodiment, the control method further includes: the following control operations are performed in a case that the SOC is greater than a second preset SOC: the second input end of the through-shaft gear pump is controlled to be in communication with the second branch; the first input end of the through-shaft gear pump is controlled to be disconnected from the first branch; the engine is controlled to be shut down; and the traction battery is controlled to drive the electric motor to drive the through-shaft gear pump at the second output torque.

The present disclosure further provides a computer program product. The computer program product is adapted to execute a program initialized with the following method steps when executed on a data processing device: a first output torque of the engine and an SOC of the traction battery are acquired in real time in a case that the first input end of the through-shaft gear pump is in communication with the first branch; the second input end of the through-shaft gear pump is controlled to be in communication with the second branch in a case that the first output torque and the SOC satisfy a first preset condition; and a second output torque of the electric motor is adjusted to change the first output torque and improve specific fuel consumption of the engine.

In an embodiment, it is determined that the first output torque and the SOC satisfy the first preset condition in a case that any one of the following conditions is satisfied: the first output torque is less than or equal to a lower limit value of a preset torque interval, and the SOC is less than or equal to a first preset SOC; the first output torque is located within the preset torque interval, and the SOC is less than or equal to the first preset SOC; and the first output torque is greater than an upper limit value of the preset torque interval, and the SOC is greater than the first preset SOC.

In an embodiment, the step that second output torque of the electric motor is adjusted to change the first output torque and improve specific fuel consumption of the engine includes: the electric motor is controlled to generate power and negative output torque of the electric motor is increased to increase the first output torque and improve the specific fuel consumption of the engine in a case that the first output torque is less than or equal to a lower limit value of a preset torque interval and the SOC is less than or equal to a first preset SOC, and alternatively, the first output torque is located within a preset torque interval and the SOC is less than or equal to a first preset SOC.

In an embodiment, the control method further includes: the electric motor is controlled to consume power and positive output torque of the electric motor is increased to reduce the first output torque and improve the specific fuel consumption of the engine in a case that the first output torque is greater than an upper limit value of the preset torque interval and the SOC is greater than the first preset SOC.

In an embodiment, the control method further includes: the second input end of the through-shaft gear pump is controlled to be disconnected from the second branch, the electric motor is controlled to be shut down and the engine is controlled to drive the through-shaft gear pump at the first output torque in a case that the first output torque and the SOC satisfy a second preset condition.

In an embodiment, it is determined that the first output torque and the SOC satisfy the second preset condition in a case that any one of the following conditions is satisfied: the first output torque is less than or equal to a lower limit value of a preset torque interval, and the SOC is greater than a first preset SOC; the first output torque is located within the preset torque interval, and the SOC is greater than the first preset SOC; and the first output torque is greater than an upper limit value of the preset torque interval, and the SOC is less than the first preset SOC.

In an embodiment, the control method further includes: the following control operations are performed in a case that the SOC is greater than a second preset SOC: the second input end of the through-shaft gear pump is controlled to be in communication with the second branch; the first input end of the through-shaft gear pump is controlled to be disconnected from the first branch; the engine is controlled to be shut down; and the traction battery is controlled to drive the electric motor to drive the through-shaft gear pump at the second output torque.

Those skilled in the art should understand that the embodiments of the present disclosure can be provided as methods, systems, or computer program products. Thus, the form of full hardware embodiments, full software embodiments, or software and hardware combined embodiments can be used in the present disclosure. Moreover, the form of a computer program product implemented on one or more computer usable storage media (including, but not limited to, disk memories, compact disc read-only memories (CD-ROMs), optical memories, etc.) including computer usable program codes can be used in the present disclosure.

The present disclosure is described with reference to flowcharts and/or block diagrams of methods, devices (systems), and computer program products according to the embodiments of the present disclosure. It should be understood that each flow and/or block in the flowcharts and/or block diagrams and combinations of the flows and/or blocks in the flowcharts and/or block diagrams can be implemented by computer program instructions. These computer program instructions can be provided for a general-purpose computer, a special-purpose computer, an embedded processor, or a controller of another programmable data processing device to generate a machine, such that an apparatus for implementing a specific function in one or more flows in the flowcharts and/or in one or more blocks in the block diagrams is generated by the instructions executed by the computer or the controller of another programmable data processing device.

These computer program instructions may be stored in a computer-readable memory that can instruct the computer or another programmable data processing device to work in a specific manner, such that an artifact that includes an instruction apparatus is generated by the instructions stored in the computer-readable memory. A specific function in one or more flows in the flowcharts and/or in one or more blocks in the block diagrams is implemented by the instruction apparatus.

These computer program instructions may be loaded onto a computer or another programmable data processing device, such that a series of operation steps are performed on the computer or the another programmable device to generate computer-implemented processing. Thus, steps for implementing a specific function in one or more flows in the flowcharts and/or in one or more blocks in the block diagrams are provided by the instructions executed on the computer or the another programmable device.

In a typical configuration, a computing device includes one or more central processing units (CPUs), an input/output interface, a network interface, and a memory.

The memory may include a non-permanent memory, a random access memory (RAM) and/or a non-volatile memory (such as a read-only memory (ROM) or a flash memory (flash RAM)) and so on in a computer-readable medium. The memory is an example of a computer-readable medium.

The computer-readable medium includes permanent and non-permanent, movable and non-movable media and may store information through any method or technology. The information can be modules of computer-readable instructions, data structures and programs, or other data. Examples of a computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices, or any other non-transmission media that may be configured to store information capable of being accessed by a computing device. According to the definitions herein, the computer-readable medium does not include transitory media, such as modulated data signals and carrier waves.

It should be noted that the terms "comprise", "include", "contain", or any other variations thereof are intended to cover non-exclusive inclusions, such that a process, a method, a commodity, or a device that includes a series of elements not only includes those elements, but also includes other elements that are not explicitly listed, or further includes inherent elements of the process, the method, the commodity, or the device. Without more restrictions, the elements defined by the sentence "include a..." or "comprise a..." do not exclude the existence of other identical elements in the process, the method, the commodity, or the device that includes the elements.

What are described above are merely embodiments of the present disclosure and are not configured to limit the present disclosure. Those skilled in the art can make various modifications and variations to the present disclosure. Any modifications, equivalent substitutions, improvements, etc. made within the spirit and principle of the present disclosure should fall within the scope of the claims of the present disclosure.

## Claims

1. A control method for a hybrid power system, wherein the hybrid power system comprises a through-shaft gear pump, the through-shaft gear pump comprises a first input end and a second input end, the first input end is connected to a first branch, the second input end is connected to a second branch, the first branch comprises an engine, and the second branch comprises an electric motor and a traction battery; and the control method comprises:
acquiring a first output torque of the engine and a state of charge of the traction battery in real time in a case that the first input end of the through-shaft gear pump is in communication with the first branch;
controlling the second input end of the through-shaft gear pump to be in communication with the second branch in a case that the first output torque and the state of charge satisfy a first preset condition; and
adjusting a second output torque of the electric motor to change the first output torque and to improve specific fuel consumption of the engine.

2. The control method for a hybrid power system according to claim 1, wherein it is determined that the first output torque and the state of charge satisfy the first preset condition in a case that any one of the following conditions is satisfied:
the first output torque is less than or equal to a lower limit value of a preset torque interval, and the state of charge is less than or equal to a first preset state of charge;
the first output torque is located within the preset torque interval, and the state of charge is less than or equal to the first preset state of charge; and
the first output torque is greater than an upper limit value of the preset torque interval, and the state of charge is greater than the first preset state of charge.

3. The control method for a hybrid power system according to claim 1, wherein the adjusting a second output torque of the electric motor to change the first output torque and improve specific fuel consumption of the engine comprises:
controlling the electric motor to generate power and increasing negative output torque of the electric motor to increase the first output torque and to improve the specific fuel consumption of the engine in a case that the first output torque is less than or equal to a lower limit value of a preset torque interval and the state of charge is less than or equal to a first preset state of charge, and alternatively, the first output torque is located within a preset torque interval and the state of charge is less than or equal to a first preset state of charge.

4. The control method for a hybrid power system according to claim 3, further comprising:
controlling the electric motor to consume power and increasing positive output torque of the electric motor to reduce the first output torque and to improve the specific fuel consumption of the engine in a case that the first output torque is greater than an upper limit value of the preset torque interval and the state of charge is greater than the first preset state of charge.

5. The control method for a hybrid power system according to claim 1, further comprising:
controlling the second input end of the through-shaft gear pump to be disconnected from the second branch, controlling the electric motor to be shut down and controlling the engine to drive the through-shaft gear pump at the first output torque in a case that the first output torque and the state of charge satisfy a second preset condition.

6. The control method for a hybrid power system according to claim 5, wherein it is determined that the first output torque and the state of charge satisfy the second preset condition in a case that any one of the following conditions is satisfied:
the first output torque is less than or equal to a lower limit value of a preset torque interval, and the state of charge is greater than a first preset state of charge;
the first output torque is located within the preset torque interval, and the state of charge is greater than the first preset state of charge; and
the first output torque is greater than an upper limit value of the preset torque interval, and the state of charge is less than the first preset state of charge.

7. The control method for a hybrid power system according to claim 1, further comprising:
performing the following control operations in a case that the state of charge is greater than a second preset state of charge:
controlling the second input end of the through-shaft gear pump to be in communication with the second branch;
controlling the first input end of the through-shaft gear pump to be disconnected from the first branch;
controlling the engine to be shut down; and
controlling the traction battery to drive the electric motor to drive the through-shaft gear pump at the second output torque.

8. A controller, configured to perform the control method for a hybrid power system according to any one of claims 1-7.

9. A hybrid power system, comprising:
a through-shaft gear pump, wherein the through-shaft gear pump comprises a first input end and a second input end, the first input end is connected to a first branch, and the second input end is connected to a second branch;
the first branch comprising an engine;
the second branch comprising an electric motor and a traction battery, wherein the electric motor is connected to the traction battery; and
the controller according to claim 8.

10. The hybrid power system according to claim 9, wherein the through-shaft gear pump further comprises:
an input-through gear shaft comprising the first input end and the second input end; and
a driven gear shaft meshing with the input-through gear shaft.

11. The hybrid power system according to claim 10, wherein the through-shaft gear pump further comprises:
a pump housing configured to fix the input-through gear shaft and the driven gear shaft and isolate an interior of the through-shaft gear pump from an external environment;
a left end cover fixed to a first end of the pump housing; and
a right end cover fixed to a second end of the pump housing.

12. The hybrid power system according to claim 10, wherein the first branch further comprises:
a piston pump, wherein a first end of the piston pump is connected to the engine, a second end of the piston pump is connected to the through-shaft gear pump, an oil pump assembly system is formed by the piston pump and the through-shaft gear pump, and the oil pump assembly system is configured to be connected to a target operating system and transmit a first output torque of the engine to the target operating system.

13. The hybrid power system according to claim 12, wherein the second branch further comprises:
a speed reducer, wherein a first end of the speed reducer is connected to the through-shaft gear pump, a second end of the speed reducer is connected to the electric motor to make the electric motor coaxial with the oil pump assembly system formed by the piston pump and the through-shaft gear pump, the speed reducer is configured to adjust a first transmission ratio of the electric motor, and an output shaft of the speed reducer is coaxial with an output shaft of a transmission in a case that the first transmission ratio is adjusted by the speed reducer to reduce a rotating speed of the electric motor and increase a second output torque of the electric motor.

14. The hybrid power system according to claim 12, wherein a first end of the electric motor is connected to the through-shaft gear pump, a second end of the electric motor is connected to the traction battery, the electric motor is coaxial with the oil pump assembly system formed by the piston pump and the through-shaft gear pump, and the electric motor is configured to provide a second output torque.

15. The hybrid power system according to claim 12, wherein the first branch further comprises:
a power take-off, wherein a first end of the power take-off is connected to the engine, and a second end of the power take-off is connected to the piston pump, and the power take-off is configured to transmit an output torque provided by the engine to the piston pump;
a clutch, wherein a first end of the clutch is connected to the engine, and a second end of the clutch is connected to a transmission, and the clutch is configured to connect the engine to the transmission to prevent the transmission from impacting the engine during overload; and
the transmission, wherein a first end of the transmission is connected to the clutch, and a second end of the transmission is connected to the power take-off, and the transmission is configured to adjust a second transmission ratio of the engine.

16. The hybrid power system according to claim 12, wherein a second output torque is output by the electric motor and transmitted to the engine through the second branch to adjust the first output torque of the engine, and the adjusted first output torque is transmitted by the through-shaft gear pump to the target operating system through the first branch in a case that the first input end of the through-shaft gear pump is in communication with the first branch and the second input end of the through-shaft gear pump is in communication with the second branch; and
the first output torque of the engine is transmitted by the through-shaft gear pump to the target operating system through the first branch in a case that the first input end is in communication with the first branch and the second input end is disconnected from the second branch.

17. The hybrid power system according to claim 12, wherein the electric motor is driven by the traction battery to output a second output torque, and the second output torque of the electric motor is transmitted by the through-shaft gear pump to the target operating system through the second branch in a case that the second input end of the through-shaft gear pump is in communication with the second branch and the first input end of the through-shaft gear pump is disconnected from the first branch.

18. A machine-readable storage medium, storing an instruction, wherein the instruction causes a controller to be configured to perform the control method for a hybrid power system according to any one of claims 1-7 when executed by the controller.
